Europäisches Patentamt

European Patent Office

Office européen des brevets

(11) Publication number: **0 263 076 B1**

(12) **EUROPEAN PATENT SPECIFICATION**

(45) Date of publication of patent specification: **19.02.92**  (51) Int. Cl.⁵: **F16J 15/34**

(21) Application number: **87830276.9**

(22) Date of filing: **16.07.87**

(54) **Ring for mechanical seal.**

(30) Priority: **18.07.86 IT 56586 U**

(43) Date of publication of application:
**06.04.88 Bulletin 88/14**

(45) Publication of the grant of the patent:
**19.02.92 Bulletin 92/08**

(84) Designated Contracting States:
**AT BE CH DE ES FR GB GR LI LU NL SE**

(56) References cited:
**FR-A- 2 350 527**
**FR-A- 2 454 569**
**GB-A- 1 216 416**
**GB-A- 2 070 702**

(73) Proprietor: **Nibio, Loredana**
**Via Fontanelle, 52/d**
**I-60044 Fabriano (AN)(IT)**

Proprietor: **Domini, Margherita**
**Via Mameli, 21**
**I-60044 Fabriano (AN)(IT)**

(72) Inventor: **Nibio, Loredana**
**Via Fontanelle, 52/d**
**I-60044 Fabriano (AN)(IT)**
Inventor: **Domini, Margherita**
**Via Mameli, 21**
**I-60044 Fabriano (AN)(IT)**

(74) Representative: **Baldi, Claudio**
**Piazza Ghislieri, 3**
**I-60035 Jesi (Ancona)(IT)**

Rank Xerox (UK) Business Services

## Description

This patent application for an industrial utility model concerns an improved ring for rotating mechanical seals, of the type with opposing slip-faces, using a moulded plastic or rubber ring to support a box-shaped steel ring whose surface has been machined to provide the ring-shaped lapped crown which constitutes the slip-face of the mechanical seal.

The model can be considered as being an improved version of a prior art sealing ring (see e.g. GB-A- 2070702). This was a ring for rotating mechanical seals made of moulded plastic on which was mounted, frontally and perimetrally, a flat ring made of a material suitable for use in a mechanical seal, and consisting of a moulded ring-shaped support made of a plastic material, whose characteristics made it suitable for this specific use, on the frontal wall of which was fitted, perimetrally and partially, a flat ring of a material suitable for use in a rotary type seal with opposing slip-faces and with the inner rim of said flat ring being sligtly conical so as to prevent its slipping off from the frontal surface of the plastic ring-shaped support.

The prior art sealing ring was designed with the aim of reducing the very high production costs of the sealing rings available up until that time which consisted, in general, of a couple of specially designed and produced rings made of carbon, ceramic, cast iron, special steel or stellite according to the user's requirements or preference.

This aim was achieved by limiting the use of the more costly "noble" material (i.e. that which is used to form the seal) to the area where the seal is actually made and, more exactly, the area corresponding to the ring-shaped crown where the contact between the two opposing rings occurs, and also, by using a more economical and more easily processed material such as plastic to make the rest of the structure of the ring.

While the sealing ring which is the subject of this patent application remains within the sphere of the above-mentioned inventive concept, it is now characterized by its special structural conformation which has been particularly designed with the intention of guaranteeing a firm anchorage for the plastic or rubber ring supporting the insert in "noble" material on which the ring-shaped slip-face for the mechanical seal is to be obtained.

The sealing ring in question consists of a box-shaped ring obtained by shearing, drawing and then coining a strip of steel which is anchored to a supporting ring made of moulded plastic or rubber, the two parts being joined together by a series of buttons obtained by drilling a series of holes in the inner circular wall of the steel box-ring, into which the molten material flows during the moulding and then solidifies. Once the material has solidified, a series of projections locking the plastic or rubber body to the metal insert will have been formed.

The box-shaped steel ring presents in the direction of the axis a "U" shaped cross section where the inner wing is longer than the outer one to allow for the above-mentioned series of holes which will be used for locking together with the corresponding buttons.

Once the steel strip has been sheared and drawn (thus obtaining the box-shaped ring as described above) it undergoes a coining operation to impart a slight conicity to the frontal wall of the .box-shaped ring, on the outside and on the perimeter of which the lapped ring-shaped surface which will effect the mechanical seal will be obtained.

The coupling and locking together of the metal box-shaped ring and the supporting ring can be effected equally well by two different procedures: the first, already mentioned, consisting of moulding the supporting ring in a mould where the metal box-shaped ring has previously inserted; the second, consisting of pressing the two autonomous and separately made parts together until they click into place.

For greater clarity, the description continues with reference to the enclosed drawings, which are of purely illustrative value and include:
- Fig. 1, where half of the model is shown in cross-section, illustrates the sealing ring according to the invention in a preferred profile of the external surface of the moulded plastic supporting ring;
- Fig. 2, where half of the model is shown in cross section, illustrates the sealing ring according to the invention with the moulded plastic supporting ring in an alternative preferred profile;
- Fig. 3, where half of the model is shown in cross-section, illustrates the sealing ring according to the invention, in the version where the two parts are pressed together to obtain the coupling and locking;
- Fig. 4, where half of the model is shown in cross-section, illustrates the sealing ring according to the invention, in the version where the supporting ring is made of moulded rubber instead of plastic.

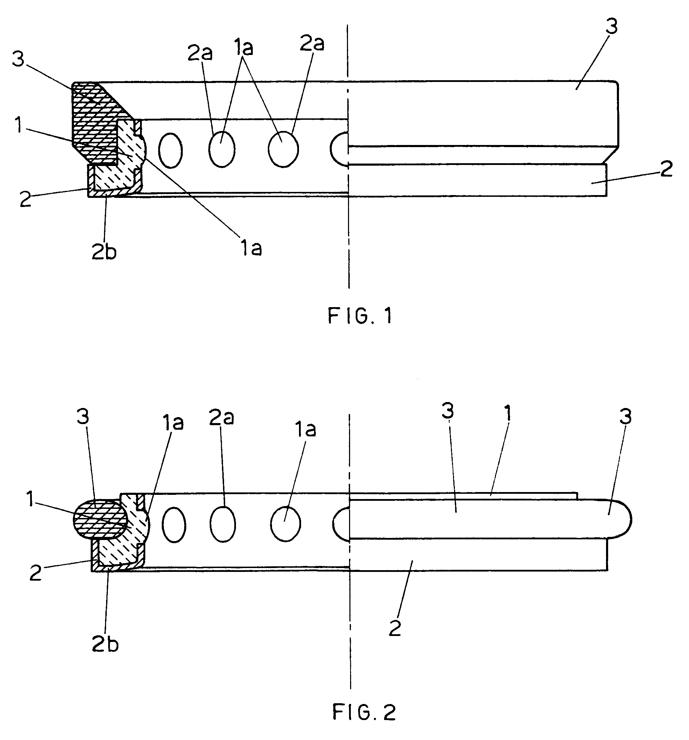

With reference to Figs. 1 and 2, the model according to the invention includes a ring (1) moulded in a plastic material whose characteristics make it suitable for this specific use, attached by means of a series of locking buttons (1a) to a metal box-shaped ring (2), obtained by shearing, drawing and then coining a strip of a special steel commonly used in the production of conventional mechanical sealing rings with slip-faces.

During the shearing phase, a series of holes (2a) will also be made in the annular disk obtained. Once the disk is drawn, the holes will be situated on the inner cylindrical wall of the box-shaped piece and this inner wall will be longer than the outer one.

The frontal face of the box-shaped ring (2) will be made slightly conical so as to determine the formation of a flat and polished, narrow, circular perimetral crown (2b) at which the contact and seal between the two ring-shaped slip-faces will be made once the lapping operation has been completed.

It is clear that Fig. 2 differs from Fig. 1 only in the profile of the external surface of the supporting ring (1). This variation has been presented solely to emphasize the fact that the use of a moulded plastic supporting ring permits any profile to be given to the ring itself without entailing any increase in the production costs. This feature is extremely interesting and valuable given that a rubber gasket (3) is usually applied to the outside of the mechanical sealing ring. Consequently the profile in negative of the rubber gasket can be reproduced and a perfect fit between the contact surfaces of the gasket (3) and the supporting ring (1) will be obtained.

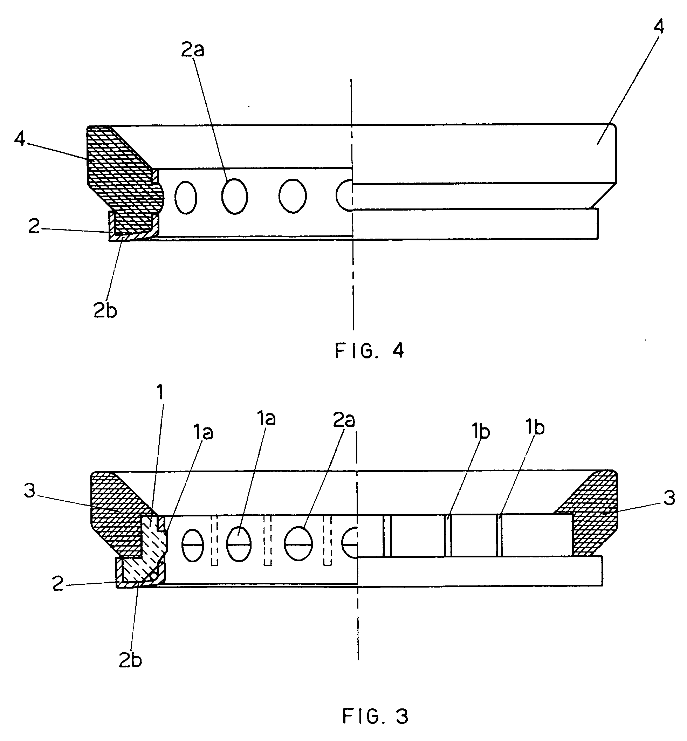

In this presentation, the ring could even be moulded directly in rubber so as to incorporate the gasket and thus avoid any problems of continuity, as is shown in Fig. 4, where number (4) in fact shows a moulded rubber ring with a conformation which permits it to act not only as a support for the box-shaped metal ring (2) but also as an external gasket.

Fig. 3 shows the modifications to the conformation of the supporting ring which are necessary when it is to be joined to the box-shaped ring (2) by pressure with final click instead of being moulded using a mould where the box-shaped ring (2) has already been inserted (as described in the two embodiments illustrated in Figs. 1 and 2).

A series of flexible tabs will be provided along the upper edge of the ring (1) by means of incising longitudinal grooves (1b) between the buttons (1a). These flexible tabs spread out radially when the two parts are pushed together until they click into place thus allowing the buttons (1a) to slip into the corresponding holes (2a).

## Claims

1. A ring for rotating mechanical seals of the opposing slip-faces type, made up of a box-shaped steel ring (2) supported by a ring (1) made of moulded plastic material or rubber, characterized in that the box-shaped ring (2) is obtained by shearing, drawing and then coining a strip of steel, the moulded plastic or rubber support-ring (1) being attached to the box-shaped ring (2) by means of a circular series of buttons (1a), locked into an equal number of corresponding holes (2a), drilled for that specific purpose in the inner cylindrical wall of the box-shaped ring (1) which presents in the direction of the axis a "U"-shaped cross section with the outer wing being shorter than the inner one and on the frontal face of which a special coining will create, after lapping, a perimetral circular crown (2b) which shall be flat and polished and where the contact and seal between the two slip-faces will be made.

2. A ring for rotating mechanical seals as in claim 1), characterized in that the box-shaped steel ring (2) and the plastic moulded supporting ring (1) are locked together when the plastic material is injected into an appropriate mould into which the box-shaped steel ring (2) has previously been inserted.

3. A ring for rotating mechanical seals as in claim 1), characterized in that the box-shaped steel ring (2) and the plastic moulded supporting ring (1) are locked together in a click-in action by forcing the latter around the inner cylindrical wall of the box-shaped steel ring, the locking buttons (1a) being designed with a slightly cut-off profile so that they can slip in easily and there is a series of grooves (1b), one beside each button, which practically forms a series of elastic tabs along the upper edge of the ring (1).

4. A ring for rotating mechanical seals as in claim 1), characterized in that the supporting ring is made of moulded rubber and incorporates the outer gasket ring.

## Revendications

1. Anneau pour joints mécaniques rotatifs, du type à surfaces frottantes frontales, constitué d'un boîtier en acier (2) supporté par un anneau (1) moulé en matériel plastique ou en caoutchouc, caractérisé en ce que ledit boîtier en acier (2) est obtenu par cisaillement, bourrage et frappe d'un ruban d'acier, étant l'anneau de support (1) en plastique ou en caoutchouc accroché au boîtier en acier (2) au moyen d'une série circulaire de boutons (1a), encastrés dans autant de trous correspondants (2a), réalisés à cet effet sur la paroi cylindrique interne du boîtier (1) qui présente, sur un plan qui passe par l'axe, une section transversale en forme de "U" avec une aile externe plus basse, et sur la face frontale duquel on réalise une frappe apte à déterminer, suite à un successif polissage, une couronne circulaire périphérique (2b), plate et lisse, en correspondance de laquelle s'effectue le contact et l'étanchéité entre les surfaces frottantes.

2. Anneau pour joints mécaniques rotatifs, selon la revendication 1), caractérisé en ce que l'accrochage entre le boîtier en acier (2) et l'anneau de support (1), moulé en plastique, s'effectue en injectant le matériel plastique dans un moule adapté dans lequel on a préalablement introduit et mis en place le boîtier en acier (2).

3. Anneau pour joints mécaniques rotatifs, selon la revendication 1), caractérisé en ce que le boîtier en acier (2) et l'anneau de support (1), moulé en matériel plastique, sont fixés ensemble au moyen de couplage à déclic élastique en enfilant extérieurement ce dernier avec force sur la paroi cylindrique interne du boîtier, un bord arrondi de mise en place étant prévu sur les boutons d'accrochage (1a) ainsi qu'une série d'entailles (1b), entre bouton et bouton, déterminant pratiquement la formation d'autant de languettes élastiques le long du bord supérieur de l'anneau (1).

4. Anneau pour joints mécaniques rotatifs, selon la revendication 1), caractérisé en ce que l'anneau de support résulte moulé en caoutchouc et incorpore, sans solution de continuité, l'anneau externe d'étanchéité.

**Patentansprüche**

1. Ring für mechanische Drehdichtungen, mit gleitenden Stirnflächen, bestehend aus einem Stahlkasten (2), der auf einem aus Plastik oder Gummi gepressten Ring (1) gelagert ist, dadurch gekennzeichnet, daß der Stahlkasten (2) durch Schneiden, Ziehen und Prägen eines Stahlbandes hergestellt worden ist; der aus Plastik oder Gummi gepresste Auflagering (1) mit dem Kasten (2) durch eine kreisförmige Reihe an Knöpfen (1a) verbunden ist, die in ebensoviele entsprechende an der zylindrischen Innenwand des Kastens (1) vorgesehenen Löcher (2a) eingreift, und daß er auf einer durch die Achse durchführenden Ebene einen U-förmigen Querschnitt mit einem niedrigeren äußeren Flügel aufweist und daß auf deren Vorderseite eine Prägung ausgeführt wird, die nach der folgenden Läppung einen kreisförmigen peripherischen, flachen und glatten Kranz (2b) bestimmt, in dessen Übereinstimmung der Kontakt und die Abdichtung zwischen den gleitenden Oberflächen stattfindet.

2. Ring für mechanische Drehdichtungen gemäß Patentanspruch 1), dadurch gekennzeichnet, daß die Verbindung zwischen Stahlkasten (2) und aus Plastik gepresstem Auflagering (1) dadurch erfolgt, daß der Kunststoff in ein geeignetes Werkzeug eingespritzt wird, in das zuvor der Stahlkasten (2) eingesetzt worden ist.

3. Ring für mechanische Drehdichtungen gemäß Patentanspruch 1), dadurch gekennzeichnet, daß der Stahlkasten (2) und der aus Plastik gepresste Auflagering (1) miteinander durch eine elastische Springverbindung verkuppelt sind, wobei der letztere außen an der zylindrischen Innenwand des Kastens eingepresst wird und an den Verbindungsknöpfen (1a) eine Schräge und eine Reihe von Einschnitten (1b) zwischen den Knöpfen vorgesehen ist, die praktisch die Bildung von ebensovielen biegsamen Zungen dem oberen Ringrand entlang (1) erzeugt.

4. Ring für mechanische Drehdichtungen gemäß Patentanspruch 1), dadurch gekennzeichnet, daß der Auflagering aus Gummi gepresst ist und ohne Unterbrechung den äußeren Dichtungsring mit einbezieht.

FIG. 1

FIG. 2

FIG. 4

FIG. 3